# EUROPEAN PATENT APPLICATION

(11) **EP 1 744 534 A1**
(43) Date of publication of application: **17.01.2007**
(21) Application number: 06116950.4
(22) Date of filing: 11.07.2006
(51) Int. Cl.: H04N 1/03

(54) **Adjustable image sensing unit and method of assembling the image sensing unit**

(30) Priority: 12.07.2005 KR 2005062877
(71) Applicant: Samsung Electronics Co., Ltd, Suwon-si, Gyeonggi-do 442-742 (KR)
(72) Inventor: Kim, Hyun-surk, Yeongtong-gu, Suwon-si, Gyeonggi-do, (KR)
(74) Representative: Perkins, Dawn Elizabeth

(57) **Abstract**

An image sensing unit, a scanner including the same, a multifunctional printer including the scanner, and a method of manufacturing an image sensing unit are provided. The image sensing unit includes a housing, a reflection mirror assembly, and an image sensor. The reflection mirror assembly comprises a plurality of reflection mirrors that are adjustably installed inside the housing to change the path of an incident light beam, and a holder in which the reflection mirror is fixed. The holder being rotatable around an axis and the reflexion mirrors being disposed on a virtual circumference centered on the axis. The image sensor has a location that can be adjusted in the housing to receive the light beam whose path has been changed and generates an image signal.

## Description

The present invention relates to an image sensing unit that reads an image recorded on a medium to be read, a scanner with the image sensing unit, a multifunctional printer, and a method of assembling the image sensing unit.

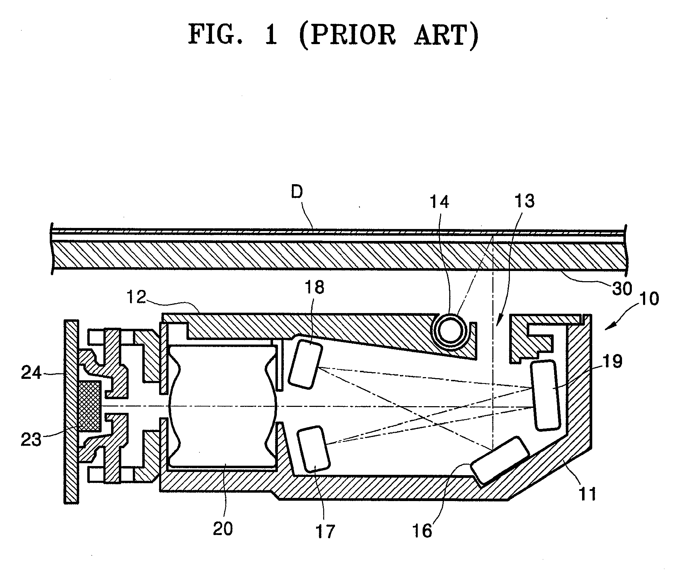

In general, a scanner reads an image from a medium to be read and converts it into a digital image signal to be reproduced on a recording medium or a display device. Such scanners include an image sensing unit with an image sensor which generates an image signal. Figure 1 is a cross section of a conventional image sensing unit.

The image sensing unit illustrated in Figure 1 is included in a multifunctional printer which includes a printer and a scanner. Referring to Figure 1, the image sensing unit 10 includes a housing formed of a cover 12 combined with a base frame 11, a light source 14 radiating a light beam onto a medium to be read D, reflection mirrors 16, 17, 18, and 19, a lens 20, and an image sensor 23 mounted on a circuit board 24 to be installed in the housing.

A light beam emitted from the light source 14 passes through a transparent window 30 and is reflected from the medium D into the housing through an elongated hole 13 formed in the cover 12. The light beam is reflected by the reflection mirrors 16, 17, 18, and 19, and the light beam passes through the lens 20 to form an image on the image sensor 23. The image sensor 23 generates an image signal based on the light beam.

In the conventional image sensing unit 10, the reflection mirrors 16, 17, 18, and 19, the lens 20, and the image sensor 23 must be disposed in precise locations so that a light beam is aligned properly. Also, high precision is required for the assembly process. Due to these requirements, image sensing units with imprecise alignment are sometimes produced. When such an image sensing unit is found in a test, the entire image sensing unit must be disposed of, thereby increasing costs.

Further, heat can alter the light path and cause skew or bow even if the alignment of the components of the image sensing unit 10 was correct when manufactured. To prevent this problem, the entire base frame must be made of a heat resistant material, and this also increases manufacturing costs.

Accordingly, there is a need for an improved image sensing unit which maintains the alignment of a light beam in a cost-effective and reliable manner.

An aspect of the present invention is to address at least the above problems and/or disadvantages and to provide at least the advantages described below. Accordingly, an aspect of the present invention is to provide an image sensing unit including a separate reflection mirror assembly installed in a housing, a scanner including the image sensing unit, and a multifunctional printer including the scanner.

Another aspect of the present invention is to provide a method of assembling the image sensing unit.

According to an aspect of the present invention, an image sensing unit comprises a housing; a reflection mirror assembly, and an image sensor. The reflection mirror assembly comprises one or more reflection mirrors that are adjustably installed inside the housing to change the path of an incident light beam, and a holder in which the reflection mirror is fixed. The image sensor has a location that can be adjusted in the housing to receive the light beam whose path has been changed and generates an image signal.

The image sensing unit may further include a supporting unit which supports the reflection mirror assembly and adjusts the inclination of the reflection mirror assembly.

The holder may further include a shaft installed in the holder to form a rotation axis of the reflection mirror assembly, and the supporting unit may include a supporting member installed inside the housing and comprising a recess unit in which a shaft is installed; and an elastic member which is bound to the supporting member to elastically press the shaft into the recess unit.

The supporting member and the housing may be attached by a fastener, and the supporting member may have a slot through which the fastener passes to adjust the location of the reflection mirror assembly by adjusting the location of the supporting member with respect to the housing.

The elastic member and the supporting member may be attached by a fastener, and the elastic member may have a slot through which the fastener passes to adjust the location of the reflection mirror assembly by adjusting the location of the elastic member with respect to the supporting member.

The holder may have a groove or a step surface on which an end portion of the reflection mirror is fixed.

The image sensing unit may further include a lens which is fixed inside the housing and corrects the path of an incident light beam from the reflection mirror assembly to form an image on an image sensor.

The holder may be made of a heat resistant material.

According to another aspect of the present invention, a scanner comprises a transparent window on which a medium to be read is placed, and an image sensing unit which moves in a substantially straight direction under the transparent window and reads the medium to be read to generate an image signal.

According to another aspect of the present invention, a multifunctional printer comprises a printer for printing an image on a recording medium, and a scanner comprising a transparent window in which a medium to be read is placed; and an image sensing unit which moves in a substantially straight direction under the transparent window and reads the medium to be read to generate an image signal.

According to another aspect of the present invention, a method of assembling an image sensing unit comprises the steps of assembling a reflection mirror assembly by fixing one or more reflection mirrors in a holder, fixing the reflection mirror assembly inside a housing after adjusting the location of the reflection mirror assembly, and fixing the image sensor in the housing after adjusting the location of the image sensor to receive a light beam whose path is changed by the reflection mirror assembly.

The step of fixing the reflection mirror assembly may include the steps of supporting the reflection mirror assembly with a supporting unit to adjust the inclination of the reflection mirror assembly and installing the supporting unit inside the housing.

The holder may include a shaft forming the rotation axis of the reflection mirror assembly, and the supporting unit may include a supporting member with a recess unit and an elastic member which is attached to the supporting member. The step of supporting the reflection mirror assembly may include the steps of placing the shaft of the holder in the recess unit of the supporting member and fixing the elastic member to the supporting member to elastically press the shaft into the recess unit of the supporting member to adjust the inclination of the reflection mirror assembly. The step of installing the supporting unit may include the step of installing the supporting member inside the housing.

The supporting member may be fixed in the housing by the steps of attaching the supporting member to the housing with a fastener passing through a slot formed in the supporting member, moving the supporting member within a range of the slot to adjust the location of the reflection mirror assembly, and tightening the fastener.

The elastic member may be fixed to the supporting member by the steps of attaching the elastic member to the supporting member with a fastener passing through a slot formed in the elastic member, moving the elastic member within a range of the slot to adjust the location of the reflection mirror assembly, and tightening the fastener.

The reflection mirror assembly may be assembled by fixing an end portion of the reflection mirror in a groove or step surface formed in the holder.

The method of assembling an image sensing may further include the step of fixing a lens which corrects the path of an incident light beam to form an image in the image sensor inside the housing.

The above and other objects, features, and advantages of certain exemplary embodiments of the present invention will be more apparent from the following description taken in conjunction with the accompanying drawings, in which:
Figure 1 is cross-sectional view of a conventional image sensing unit;
Figure 2 is a cross-sectional view of a multifunctional printer according to an exemplary embodiment of the present invention;
Figure 3 is a perspective view of a reflection mirror assembly installed inside an image sensing unit of the multifunctional printer illustrated in Figure 2;
Figure 4 is a perspective view of a holder included in the reflection mirror assembly of Figure 3 according to another exemplary embodiment of the present invention;
Figure 5 is a perspective view of a supporting unit which supports the reflection mirror assembly of Figure 3;
Figure 6 is a horizontal cross-sectional view of the image sensing unit of the multifunctional printer illustrated in Figure 2; and
Figure 7 is a cross-sectional view of the image sensing unit of the multifunctional printer illustrated in Figure 2.

Throughout the drawings, the same reference numerals will be understood to refer to the same elements, features, and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

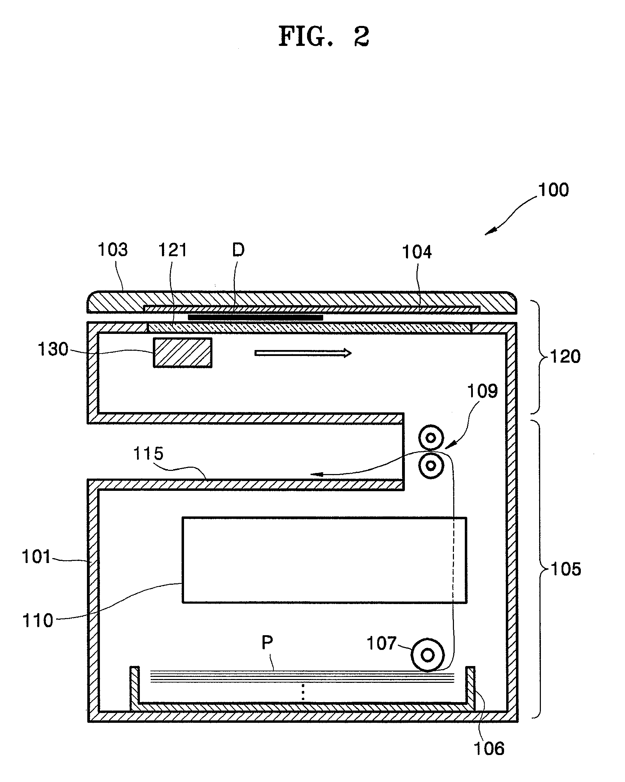

Figure 2 is a cross-sectional view of a multifunctional printer according to an exemplary embodiment of the present invention. Referring to Figure 2, an image forming apparatus 100 includes a case 101 and a flat bed 103 installed on an upper portion of the case 101 to be opened and closed. A printer 105 for printing an image is included in the lower portion of the image forming apparatus 100. The printer 105 includes a paper feeding cassette 106 in which a printing medium P is loaded, a pickup roller 107 transferring the printing medium P, a transfer unit including a discharging roller 109, a printing unit 110 printing an image on the printing medium P, and a discharge substrate 115. The printing unit 110 may form an image using one of an electronic photographic method, an inkjet method, or a thermal method, or any other suitable method.

A scanner 120 is included in an upper portion of the image forming apparatus 100 for reading recorded images. The scanner 120 includes a transparent window 121 where a medium D to be read is placed and an image sensing unit 130 which is moved straight as indicated by the arrow by a driving means (not shown), reads the medium D and generates an image signal. A white board 104 is provided on the surface of the flat bed 103 facing the transparent window 121. The white board 104 provides a uniform background for the medium D in the image sensing unit 130. Thus, the light beam is not diffused outside the image forming apparatus but instead is reflected to the image sensing unit 130, and thus a high quality scanned image is obtained.

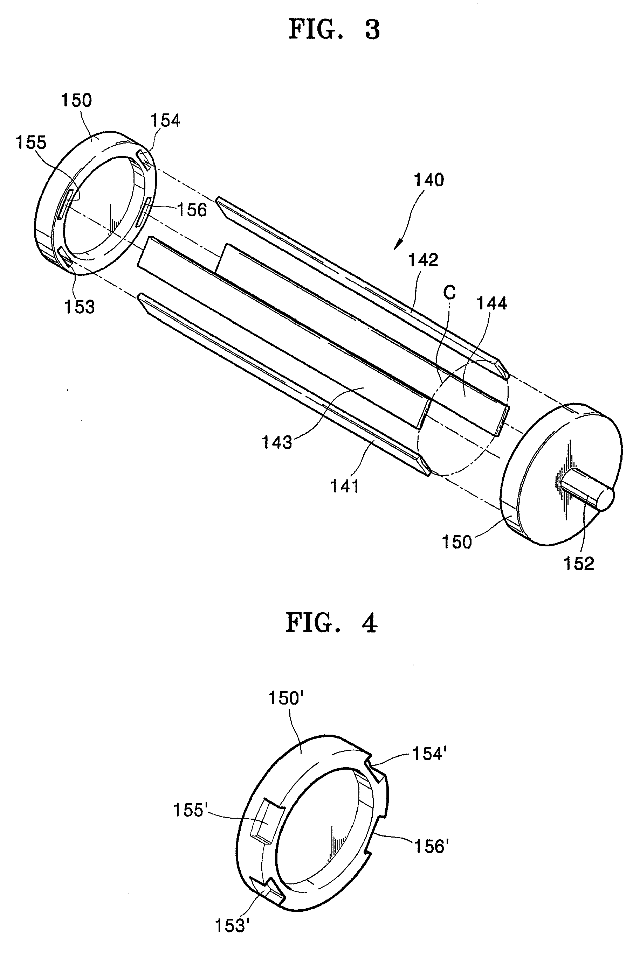

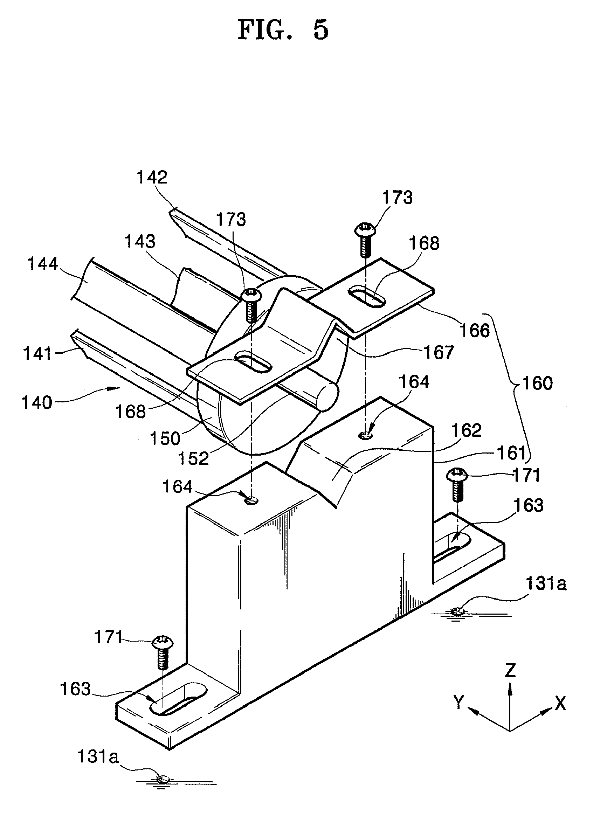

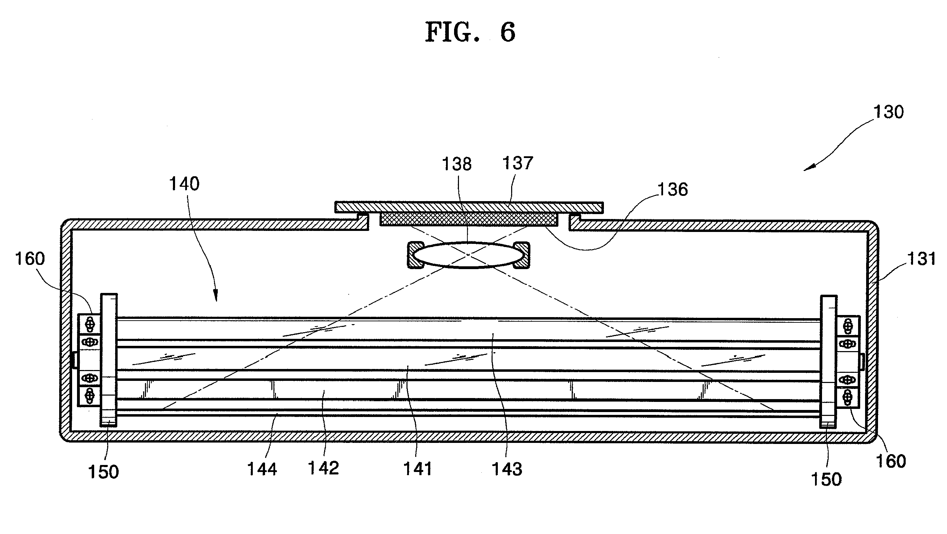

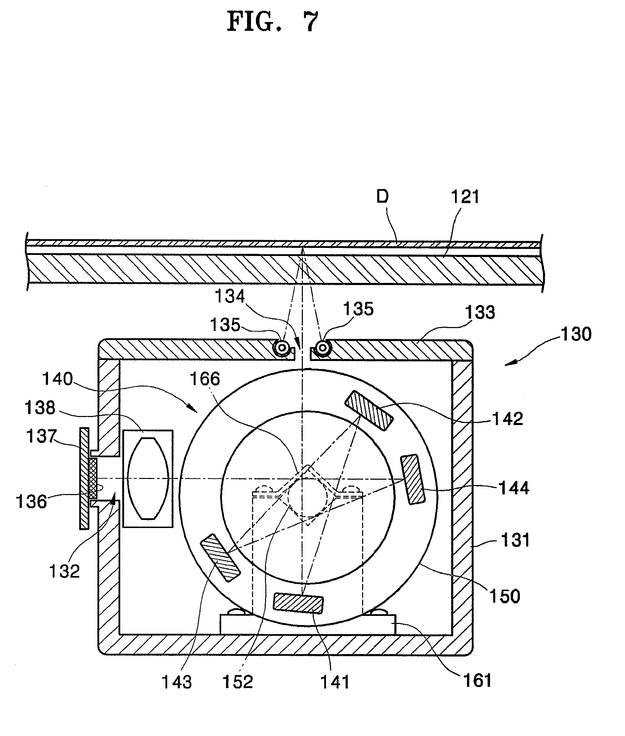

Figure 3 is a perspective view of a reflection mirror assembly 140 installed inside the image sensing unit 130 of Figure 2, and Figure 4 is a perspective view of a holder included in the reflection mirror assembly 140 of Figure 3 according to another exemplary embodiment of the present invention. Figure 5 is a perspective view of a supporting unit which supports the reflection mirror assembly 140 of Figure 3, and Figure 6 is a horizontal cross-sectional view of the image sensing unit of Figure 2. Figure 7 is a horizontal cross-sectional view of the image sensing unit of Figure 2.

Referring to Figures 6 and 7, the image sensing unit 130 includes a housing formed of a cover 133 combined with a base frame 131, a reflection mirror assembly 140 which is fixed inside the housing, a lens 138, and an image sensor 136 which blocks an opening 132 of the base frame 131 and is installed in the base frame 131. A light source 135 scans a light beam onto the medium D on the cover 133, and the scanned beam which is reflected from the medium D passes through an elongated hole 134 to be incident inside the housing.

Referring to Figures 3 through 5, the reflection mirror assembly 140 includes first, second, third, and fourth reflection mirrors 141, 142, 143, and 144 which change the path of a light beam which is incident inside the housing through the elongated hole 134, and a pair of holders 150 fixing the ends of the reflection mirrors 141 through 144. The reflection mirrors 141 through 144 extend lengthwise in the image sensing unit 130 as illustrated in Figure 6, and each of the ends is inserted onto first through fourth grooves 153, 154, 155, and 156 of the holders 150.

The light beam which is incident inside the housing is reflected sequentially by the first, second, third, and fourth reflection mirrors 141 through 144 and directed to the image sensor 136 as illustrated in Figure 7. To form such a light path, the reflection mirrors 141 through 144 are disposed along a virtual circumference C, and the light reflection mirror surface of the second reflection mirror 142 faces the light reflection surfaces of the first and third reflection mirrors 141 and 143, and the light reflection surface of the third reflection mirror 143 faces the light reflection surfaces of the second and fourth reflection mirrors 142 and 144. For minimum light path error in the assembly process, each end of the reflection mirrors 141 through 144 are installed in the grooves 153 through 156 facing the light reflection surfaces of the reflection mirrors 141 through 144. The inner surfaces of the grooves 153 through 156 are datum surfaces of the reflection mirror 141 through 144. An adhesive material, such as an ultraviolet adhesive material, can be coated in the grooves to affix the reflection mirrors 141 through 144 in the holders 150.

As illustrated in Figure 4, first through fourth step surfaces 153', 154', 155', and 156' into which the reflection mirrors 141 through 144 are installed can be provided in a holder 150'. The step surfaces 153' through 156' become datum surfaces of the reflection mirrors 141 through 144, and an adhesive material, such as an ultraviolet adhesive material, can be coated in the grooves to affix the reflection mirrors 141 through 144.

If the holders are heat-sensitive, external conditions or overheating of the inside of the scanner 120 illustrated in Figure 2 may alter the alignment of the reflection mirrors 141 through 144, thus causing skew or bow in a light beam which forms an image on the image sensor 136. To prevent this, the holders are preferably made of a heat resistant material, such as a fiber glass filled polymer resin.

The holder 150 includes a shaft 152 to form the center of rotation of the reflection mirror assembly 140. The shaft 152 is rotatably supported by the supporting unit 160 as illustrated in Figure 5. More specifically, the supporting unit 160 includes a supporting member 161 which is bound to the bottom of the base frame 131 (shown in Figures 6 and 7) by fasteners 171 (such as bolts) and an elastic member 166 which is bound to the supporting member 161 by fasteners 173 (such as bolts). The elastic member 166 may be a planar spring. Two of the supporting units 160 are provided to correspond with the pair of holders 150, and the reflection mirror assembly 140 is supported by the supporting units 160 such that the inclination of the reflection mirror assembly 140 can be adjusted.

The supporting member 161 includes a "V" shaped recess unit 162, and the shaft 152 is installed in the recess unit 162. The elastic member 166 elastically presses the shaft 152 into the recess unit 162. The elastic member 166 also includes a recess unit 167 corresponding to the recess unit 162 of the supporting member 161. In this configuration, since friction exists between the shaft 152 and the recess units 162 and 167, the disposition of the reflection mirror assembly 140 can be minutely adjusted to precisely adjust the inclination of the light axis by rotating the shaft with an external force, and is maintained in a fixed position when the image sensing unit 130 (shown in Figures 6 and 7) is operational.

Slots 168 extending in a y-direction are formed in the elastic member 166, and fasteners 173 pass through the slots and are inserted and screwed into binding holes 164 of the supporting member 161. The location of the reflection mirror assembly 140 can be adjusted minutely in the y-direction by loosening the fasteners 173 so that the elastic member 166 can be moved within the range of the slots 168. Then, the location of the reflection mirror assembly 140 can be fixed by tightening the fasteners 173 completely.

Further, elongated slots 163 extending in an x-direction are formed on the supporting members 161, and fasteners 171 pass through the slots 163 and are inserted and screwed into binding holes 131a of the base frame 131 as illustrated in Figure 7. The location of the reflection mirror assembly 140 can be adjusted minutely in the x-direction by loosening the fasteners 171 so that the supporting members 161 can be moved within the range of the slots 163. Then, the location of the reflection mirror assembly 140 can be fixed by tightening the fasteners 171 completely.

Referring to Figures 6 and 7 again, the lens 138 is disposed between the reflection mirror assembly 140 and the image sensor 136, and corrects the light beam incident from the reflection mirror assembly 140 to form an image on the image sensor 136. The image sensor 136 is mounted on a circuit substrate 137 and installed around the opening 132. The image sensor 136 can be a contact image sensor (CIS) or a charge coupled device (CCD).

A method of assembling the image sensing unit 130 will now be described. First, referring to Figures 3 and 4, the reflection mirror assembly 140 is assembled by fixing the reflection mirrors 141 through 144 on a pair of the holders 150. Then, as described with reference to Figure 5, the reflection mirror assembly 140 is installed in the supporting unit 160 including the supporting member 161 and the elastic member 166. With the supporting member 161 fixed in the base frame 131, the location of the reflection mirror assembly 140 is adjusted by rotating itself or by moving the supporting member 161 or the elastic member 166 within the ranges of the slots 163 and 168, and by tightening the fasteners 171 and 173 completely. Next, so that the light beam emitted from the reflection mirror assembly 140 can form an image in a proper position on the image sensor 136, the location of the image sensor 136 and the lens 138 are adjusted and fixed.

Since the image sensing unit of the exemplary embodiments of the present invention include a reflection mirror assembly which is constructed separately from a base frame and is adjusted and installed in the base frame, the adjustment of the light axis in the assembly process is relatively simple. Conventionally, for measurement, high precision is required in the base frame. In the exemplary embodiments of present invention, however, only the reflection mirror holder requires such high precision. Accordingly, manufacturing productivity increases, and the production of faulty devices decreases.

Light axis alignment is easy since the location of the image sensor or the lens may be adjusted slightly when a reflection mirror assembly that satisfies measurement precision within an allowed error range is provided. Furthermore, since most defects occur in the reflection mirror assembly, only the reflection mirror assembly needs to be disposed of when a defect occurs, not the entire image sensing unit. Accordingly, manufacturing costs are reduced.

According to the exemplary embodiments of the present invention, only a reflection mirror holder needs to be made of a heat resistant material. Accordingly, manufacturing costs can be reduced compared to the prior art in which the entire base frame is made of a heat resistant material.

While the invention has been shown and described with reference to certain exemplary embodiments thereof, it will be understood by those skilled in the art that various changes in form and details may be made therein without departing from the scope of the invention as defined by the appended claims.

## Claims

1. An image sensing unit comprising:
a housing;
a reflection mirror assembly (40) comprising:
one or more reflection mirrors (141, 142, 143, 144); and
a holder (150) in which the one or more reflection mirrors (141, 142, 143, 144) is fixed; and
an image sensor (136), for receiving a light beam from the reflection mirror assembly wherein the orientation of the one or more reflection mirrors (141, 142, 143, 144) in the housing is adjustable and wherein the position of the image sensor (136) in the housing is adjustable.

2. The image sensing unit of claim 1, wherein the holder (150) is rotatable around an axis and wherein the reflection mirror assembly comprises a plurality of reflection mirrors (141, 142, 143, 144) which are disposed on a virtual circumference centred on the axis.

3. The image sensing unit of claim 2, comprising four reflection mirrors (141, 142, 143, 144), wherein two of the reflection mirrors (141, 143) are disposed facing the other two reflection mirrors (142, 144).

4. The image sensing unit of claim 2 or 3, wherein the holder (150) comprises a shaft (152) forming the axis of the virtual circumference, and two end plates located at opposite ends of the shaft (152), and supporting opposite ends of the or each mirror therebetween.

5. The image sensing unit of any one of the preceding claims, further comprising
a supporting unit (160) which supports the reflection mirror assembly and adjusts the inclination of the reflection mirror assembly.

6. The image sensing unit of any of the preceding claims, wherein
the holder (150) comprises a shaft (152) forming a rotation axis of the reflection mirror assembly, and
the supporting unit (160) comprises a supporting member (161) and an elastic member (166), the supporting member (161) being installed inside the housing and comprising a recess unit (162) in which the shaft (152) is installed, the elastic member (166) being disposed on the supporting member (161) to elastically press the shaft (152) into the recess unit (162).

7. The image sensing unit of claim 6, wherein
the supporting member (161) and the housing are attached by a fastener (171), and the supporting member (161) has a slot (163) through which the fastener (171) passes to adjust the location of the reflection mirror assembly by adjusting the location of the supporting member (161) with respect to the housing.

8. The image sensing unit of claim 6 or 7, wherein
the elastic member (166) and the supporting member (161) are attached by a fastener (173), and the elastic member (166) has a slot (168) through which the fastener (173) passes to adjust the location of the reflection mirror assembly by adjusting the location of the elastic member (166) with respect to the supporting member (161).

9. The image sensing unit of any one of the preceding claims, wherein
the holder (150) has a groove or a step surface in which an end portion of the reflection mirror (141, 142, 143, 144)is fixed.

10. The image sensing unit of any one of the preceding claims, further comprising
a lens (138) which is fixed inside the housing and corrects the path of an incident light beam from the reflection mirror assembly to form an image on the image sensor (136).

11. The image sensing unit of any one of the preceding claims, wherein the holder is made of a heat resistant material.

12. A scanner comprising:
a transparent window (121) on which a medium (D) to be read is placed; and
an image sensing unit according to any one of the preceding claims which moves in a substantially straight direction under the transparent window (121) and reads the medium (D) to be read to generate an image signal.

13. A multifunctional printer comprising:
a printer for printing an image on a recording medium (P); and
a scanner according to claim 12.

14. A method of assembling an image sensing unit comprising the steps of:
assembling a reflection mirror assembly by fixing one or more reflection mirrors (141, 142, 143, 144) in a holder (150);
locating the reflection mirror assembly inside a housing and adjusting the position of the reflection mirror assembly;
fixing the reflection mirror assembly inside the housing;
locating an image sensor (136) in the housing and adjusting the location of the image sensor (136) to receive a light beam whose path is changed by the reflection mirror assembly;
fixing the image sensor (136) in the housing.

15. The method of assembling an image sensing unit of claim 14, wherein the step of fixing the reflection mirror assembly includes the step of supporting the reflection mirror assembly with a supporting unit (160) to adjust the inclination of the reflection mirror assembly and installing the supporting unit (160) inside the housing.

16. The method of assembling an image sensing unit of claim 15, wherein
the holder includes a shaft (152) forming the rotation axis of the reflection mirror assembly, and the supporting unit (160) includes a supporting member (161) with a recess unit (162) and an elastic member (166) which is attached to the supporting member (161),
the step of supporting the reflection mirror assembly comprises the steps of placing the shaft (152) of the holder in the recess unit (162) and fixing the elastic member (166) to the supporting member (161) to elastically press the shaft (152) into the recess unit (162) of the supporting member (166) to adjust the inclination of the reflection mirror assembly, and
the step of installing the supporting unit (160) comprises installing the supporting member (161) inside the housing.

17. The method of assembling an image sensing unit of claim 16, wherein the step of installing the supporting member (161) comprises the steps of:
attaching the supporting member (161) to the housing with a fastener (171) passing through a slot (163) formed in the supporting member (161);
moving the supporting member (161) within a range of the slot (163) to adjust the location of the reflection mirror assembly; and
tightening the fastener (171).

18. The method of assembling an image sensing unit of claim 16 or 17, wherein the step of fixing the elastic member (166) to the supporting member (161) comprises:
attaching the elastic member (166) to the supporting member (161) with a fastener (173) passing through a slot (168) formed in the elastic member (166);
moving the elastic member (166) within a range of the slot (168) to adjust the location of the reflection mirror assembly;
and tightening the fastener (173).

19. The method of assembling an image sensing unit of any one of claims 14 to 18, wherein the step of assembling a reflection mirror assembly comprises the step of:
fixing an end portion of the reflection mirror (141, 142, 143, 144) in a groove or step surface formed in the holder.

20. The method of assembling an image sensing unit of any one of claims 14 to 19, further comprising the step of:
fixing a lens (138) which corrects the path of an incident light beam to form an image in the image sensor (136) inside the housing.
